# FASCICULE DE BREVET EUROPEEN

(11) **EP 3 004 691 B1**
(45) Date de publication et mention de la délivrance du brevet: **05.08.2020**
(21) Numéro de dépôt: 14731704.4
(22) Date de dépôt: 22.05.2014
(51) Int. Cl.: F16H 57/027

(54) **DISPOSITIF DE MISE A L'AIR LIBRE D'UNE BOITE DE VITESSES DE VÉHICULE AUTOMOBILE**
VORRICHTUNG ZUR ENTLÜFTUNG EINES KRAFTFAHRZEUGGETRIEBES
DEVICE FOR VENTING A MOTOR VEHICLE GEARBOX

(30) Priorité: 05.06.2013 FR 1355168
(43) Date de publication de la demande: 13.04.2016
(73) Titulaire: PSA Automobiles SA, 78300 Poissy (FR)
(72) Inventeur: DEBIEVRE, Pascal, F-59282 Douchy Les Mines (FR); DELEPLACE, Arnaud, F-92130 Issy Les Moulineaux (FR); ROUILLAC, Michel, F-94800 Villejuif (FR)
(86) Numéro de dépôt international: PCT/FR2014/051201
(87) Numéro de publication internationale: WO 2014/195601

(56) Documents cités:
- EP-A1- 1 548 331
- US-A1- 2008 156 374
- US-A1- 2011 173 935

## Description

La présente invention concerne un dispositif de mise à l'air libre d'une boîte de vitesses de véhicule automobile.

### ARRIÈRE-PLAN DE L'INVENTION

Afin de mettre à l'air libre une boîte de vitesses de véhicule automobile il est connu de prévoir un orifice de mise à l'air libre débouchant dans la partie supérieure du carter de la boîte de vitesses. Les dispositifs existants comprennent généralement un tube ayant une extrémité fixée à l'orifice de mise à l'air libre du carter de la boîte de vitesses, et une extrémité opposée comprenant un tronçon vertical équipé d'un capuchon qui délimite un espace annulaire autour du tube.

Il a été constaté que lors des passages d'un gué long, c'est-à-dire a une vitesse d'environ 40 km/h et avec une profondeur d'eau d'une dizaine de centimètres, le capuchon est exposé à des projections telles que de l'eau rentre dans la boîte de vitesses. La présence d'eau dans l'huile, même en quantité très faible, engendre une dégradation de la boîte de vitesses.

Selon une observation qui fait déjà partie de l'invention, il a été constaté qu'en raison de la structure des dispositifs existants il existe un phénomène d'aspiration non négligeable au niveau du capuchon du dispositif de mise à l'air libre.

Le document de brevet US 2008/156374 A1 divulgue un dispositif de mise à l'air libre conforme au préambule de la revendication 1.

### OBJET DE L'INVENTION

Un but de l'invention est de proposer un dispositif minimisant le phénomène d'aspiration par l'orifice de mise à l'air libre.

### BRÈVE DESCRIPTION DE L'INVENTION

En vue de la réalisation de ce but, on propose selon l'invention un dispositif de mise à l'air libre d'une boite de vitesses selon la revendication 1.

Ainsi, compte tenu du rapport de section entre le second orifice et l'orifice de mise à l'air libre, la vitesse du courant d'air au niveau du second orifice est réduite de sorte que les gouttelettes sont soumises à une force d'aspiration inférieure à leur poids et les gouttelettes ne sont donc pas entraînées à l'intérieur de la boîte de vitesses.

Selon l'invention, on entend par section en pleine ouverture, une section ne comprenant aucune configuration qui pourrait créer localement une survitesse de l'air.

La chambre de détente ayant une section en pleine ouverture, permet de minimiser encore la vitesse du courant d'air.

Selon une autre observation qui fait également partie de l'invention, il a été constaté que le passage d'un gué long provoque la formation d'une vague au niveau de la paroi arrière du compartiment moteur et cette vague est projetée contre de dispositif de mise à l'air libre de la boite de vitesse.

Selon un autre aspect de l'invention, le second orifice est orienté selon une direction non tournée vers la paroi arrière du compartiment moteur, de préférence, le second orifice débouche dans un plan vertical, latéralement par rapport au compartiment moteur.

Ainsi le front de la vague ne déferle pas directement au voisinage du second orifice.

Selon encore d'autres caractéristiques de l'invention : le conduit de mise à l'air libre comporte au moins un coude entre l'orifice de mise à l'air libre et la chambre de détente; le conduit de mise à l'air libre est en caoutchouc; le conduit de mise à l'air libre est, au moins en partie, délimité par un capot ayant un bord prenant appui de façon étanche sur une partie du carter; le bord du capot est aminci; le conduit de mise à l'air libre a une extrémité engagée de façon élastique dans l'orifice de mise à l'air libre. le capot comporte un ergot de verrouillage engagé dans un perçage d'un bossage porté par le carter.

### BRÈVE DESCRIPTION DES DESSINS

D'autres caractéristiques et avantages de l'invention apparaîtront encore à la lecture de la description qui suit d'un mode de réalisation préféré non limitatif de l'invention en référence aux figures ci-jointes parmi lesquelles:
- La figure 1 est une vue en perspective schématique d'une partie de carter de boite de vitesses équipé du dispositif de mise à l'air libre selon l'invention,
- la figure 2 est une vue en coupe selon la ligne II-II de la figure 1,
- la figure 3 est une vue en coupe selon la ligne III-III de la figure 2.

### DESCRIPTION DETAILLÉE DE L'INVENTION

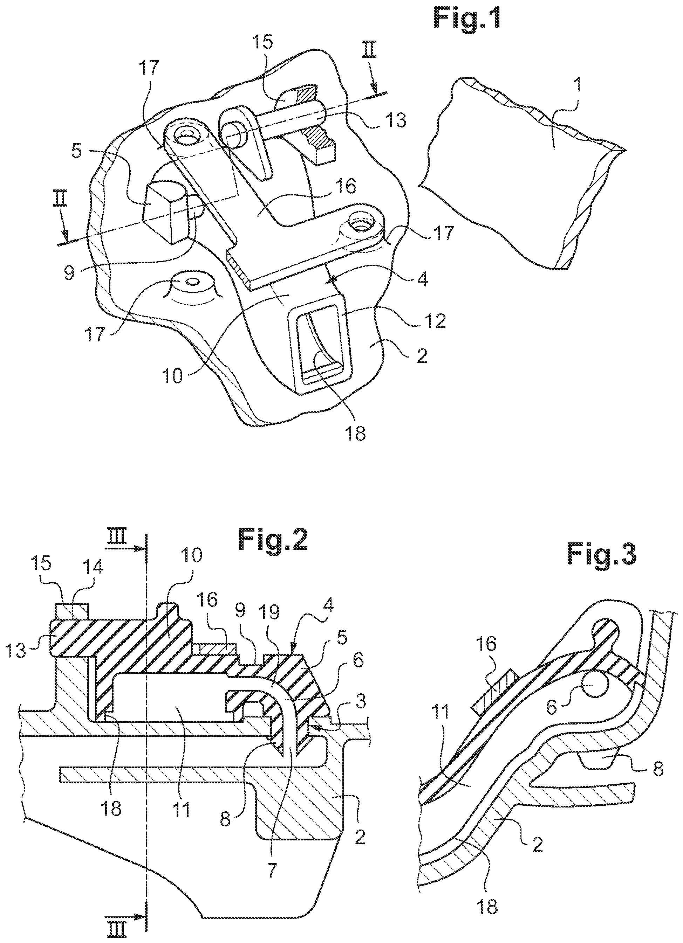

En référence aux figures, le dispositif selon l'invention va maintenant être décrit en relation avec une boîte de vitesses associée à un moteur, non représenté, disposée dans un compartiment moteur symbolisé sur la figure 1 par une partie de paroi arrière 1.

De façon connue en soi, le carter 2 comporte un orifice de mise à l'air libre 3 destiné à être associé à un dispositif de mise à l'air libre.

Dans le mode de réalisation préféré illustré, le dispositif de mise à l'air libre 4 est réalisé en caoutchouc en une seule pièce. Il comporte une partie en forme de plot 5 traversée par une partie de conduit 6 formant un coude et s'étendant à travers la paroi du carter 2 pour déboucher à l'intérieur du carter selon un premier orifice 7 entouré par un bourrelet 8 réalisant un encastrement du plot 5 dans l'orifice de mise à l'air libre 3 de la boîte de vitesses.

Le plot 5 est relié par un tronçon de tube 9 à une partie en forme de capot allongé 10 s'étendant vers le bas et délimitant une chambre de détente 11 ayant une section en pleine ouverture égale à plusieurs fois la section de l'orifice de mise à l'air libre 3. À son extrémité inférieure, la partie en forme de capot 10 débouche selon une seconde ouverture 12 du conduit de mise à l'air libre. L'ouverture 12 s'étend dans un plan vertical et débouche latéralement par rapport au compartiment moteur, c'est-à-dire perpendiculairement à la paroi arrière 1 du compartiment moteur. La partie de conduit 6 et la chambre de détente 11 forment ainsi entre le premier orifice 7 et le second orifice 12 un conduit de mise à l'air libre dans lequel le coude 19 provoque une perte de charge amplifiant l'effet de détente de la chambre 11.

La partie en forme de capot 10 est maintenue plaquée contre la surface externe du carter par un ergot 13 qui s'étend dans un perçage 14 d'un bossage 15 sur un côté du capot 10 opposé au plot 5. En outre le capot 10 et maintenu par une pièce en T 16 dont une partie a été écorchée sur la figure. La pièce 16 est fixée sur des bossages 17 en saillie par rapport à la surface externe du carter 2. La partie en forme de capot 10 a un bord aminci 18 formant une lèvre d'étanchéité de la partie en forme de capot par rapport à la surface externe du carter 2.

Bien entendu l'invention n'est pas limitée au mode de réalisation décrit et on peut y apporter des variantes de réalisation sans sortir du cadre de l'invention telle que définie par les revendications.

En particulier, bien que le dispositif selon l'invention ait été illustré avec une partie en forme de capot, ce qui permet de réaliser le dispositif selon l'invention sous une forme très compacte et très économique, le dispositif selon l'invention peut également être réalisé sous forme d'un tube coudé dont l'extrémité inférieure est évasée, ou sous toute autre forme réalisant une chambre de détente adjacente au second orifice et ayant une section supérieure à la section de l'orifice de mise à l'air libre de la boîte de vitesses.

## Revendications

1. Dispositif de mise à l'air libre d'une boite de vitesses ayant un carter (2) monté dans un compartiment moteur comportant une paroi arrière (1), le carter comportant un orifice de mise à l'air libre (3), le dispositif de mise à l'air libre comportant un conduit de mise à l'air libre (6,11) ayant un premier orifice (7) associé à l' orifice de mise à l'air libre et s'étendant vers le bas à partir de l' orifice de mise à l'air libre, le conduit de mise à l'air libre ayant un second orifice (12) adjacent à une chambre de détente (11),**caractérisé en ce que** ledit second orifice a une section supérieure à une section de l' orifice de mise à l'air libre, et **en ce que** la chambre de détente (11) a une section en pleine ouverture.

2. Dispositif selon la revendication 1, **caractérisé en ce que** le second orifice (12) est orienté selon une direction non tournée vers la paroi arrière (1) du compartiment moteur.

3. Dispositif selon la revendication 2, **caractérisé en ce que** le second orifice (12) débouche dans un plan vertical, latéralement par rapport au compartiment moteur.

4. Dispositif selon la revendication 1, **caractérisé en ce que** le conduit de mise à l'air libre comporte au moins un coude (19) entre l'orifice de mise à l'air libre et la chambre de détente.

5. Dispositif selon la revendication 1, **caractérisé en ce que** le conduit de mise à l'air libre est en caoutchouc.

6. Dispositif selon la revendication 5, **caractérisé en ce que** le conduit de mise à l'air libre est, au moins en partie, délimité par un capot (10) ayant un bord prenant appui de façon étanche sur une partie du carter.

7. Dispositif selon la revendication 6, **caractérisé en ce que** le bord (18) du capot est aminci.

8. Dispositif selon la revendication 5, **caractérisé en ce que** le conduit de mise à l'air libre a une extrémité (8) engagée de façon élastique dans l'orifice de mise à l'air libre.

9. Dispositif selon la revendication 8, **caractérisé en ce que** le capot comporte un ergot de verrouillage (13) engagé dans un perçage (14) d'un bossage (15) porté par le carter.

## Patentansprüche

1. Entlüftungsvorrichtung für ein Getriebe mit einem Gehäuse (2), das in einem Motorraum mit einer Rückwand (1) montiert ist, wobei das Gehäuse eine Entlüftungsöffnung (3) umfasst, wobei die Entlüftungsvorrichtung einen Entlüftungskanal (6, 11) mit einer ersten Öffnung aufweist (7) der Entlüftungsöffnung zugeordnet ist und sich von der Entlüftungsöffnung nach unten erstreckt, wobei der Entlüftungskanal eine zweite Öffnung (12) neben einer Expansionskammer (11) aufweist, die **dadurch gekennzeichnet ist, dass** die zweite Öffnung einen Abschnitt aufweist, der größer als ein Abschnitt ist der Entlüftungsöffnung und die Expansionskammer (11) hat einen Abschnitt in voller Öffnung.

2. Vorrichtung nach Anspruch 1, **dadurch gekennzeichnet, dass** die zweite Öffnung (12) in einer Richtung ausgerichtet ist, die nicht zur Rückwand (1) des Motorraums gedreht ist.

3. Vorrichtung nach Anspruch 2, **dadurch gekennzeichnet, dass** sich die zweite Öffnung (12) in einer vertikalen Ebene seitlich zum Motorraum öffnet.

4. Vorrichtung nach Anspruch 1, **dadurch gekennzeichnet, dass** der Entlüftungskanal mindestens einen Winkel (19) zwischen der Entlüftungsöffnung und der Expansionskammer aufweist.

5. Vorrichtung nach Anspruch 1, **dadurch gekennzeichnet, dass** der Entlüftungskanal aus Gummi besteht.

6. Vorrichtung nach Anspruch 5, **dadurch gekennzeichnet, dass** der Entlüftungskanal zumindest teilweise durch eine Abdeckung (10) begrenzt ist, die eine Randabdichtung im Widerlager gegen einen Teil des Gehäuses aufweist.

7. Vorrichtung nach Anspruch 6, **dadurch gekennzeichnet, dass** die Kante (18) der Abdeckung verdünnt ist.

8. Vorrichtung nach Anspruch 5, **dadurch gekennzeichnet, dass** der Entlüftungskanal ein Ende (8) aufweist, das elastisch in die Entlüftungsöffnung eingreift.

9. Vorrichtung nach Anspruch 8, **dadurch gekennzeichnet, dass** die Abdeckung eine Verriegelungsnase (13) aufweist, die in einen Bohrer (14) eines Vorsprungs (15) des Gehäuses eingreift.

## Claims

1. Venting device for a gearbox having a casing (2) mounted in an engine compartment comprising a rear wall (1), the casing comprising a venting opening (3), the venting device comprising a venting duct (6,11) having a first opening (7) associated with the venting opening and extending towards the bottom from the venting opening, the venting duct having a second opening (12) adjacent to an expansion chamber (11), **characterized in that** said second opening has a section greater than a section of the venting opening, and the expansion chamber (11) has a section in full opening.

2. Device according to claim 1, **characterized in that** the second opening (12) is oriented in a direction not turned towards the rear wall (1) of the engine compartment.

3. Device according to claim 2, **characterized in that** the second opening (12) opens in a vertical plane, laterally with respect to the engine compartment.

4. Device according to claim 1, **characterized in that** the venting duct has at least one elbow (19) between the venting opening and the expansion chamber.

5. Device according to claim 1, **characterized in that** the venting duct is made of rubber.

6. Device according to claim 5, **characterized in that** the venting duct is, at least in part, delimited by a cover (10) having an edge sealingly in abutment against a part of the casing.

7. Device according to claim 6, **characterized in that** the edge (18) of the cover is thinned.

8. Device according to claim 5, **characterized in that** the venting duct has one end (8) engaged elastically in the venting opening.

9. Device according to claim 8, **characterized in that** the cover comprises a locking lug (13) engaged in a drill (14) of a boss (15) of the casing.
